(19) Europäisches Patentamt / European Patent Office / Office européen des brevets

(11) **EP 1 202 439 B1**

(12) **EUROPÄISCHE PATENTSCHRIFT**

(45) Veröffentlichungstag und Bekanntmachung des Hinweises auf die Patenterteilung:
**12.12.2012 Patentblatt 2012/50**

(51) Int Cl.:
***H02M 3/07*** *(2006.01)*

(21) Anmeldenummer: **01123371.5**

(22) Anmeldetag: **10.10.2001**

(54) **Kaskadierter Gleichspannungswandler**

Cascaded DC-DC converter

Convertisseur continu-continu en cascades

(84) Benannte Vertragsstaaten:
**DE FR GB**

(30) Priorität: **11.10.2000 DE 10050496**

(43) Veröffentlichungstag der Anmeldung:
**02.05.2002 Patentblatt 2002/18**

(73) Patentinhaber: **TEXAS INSTRUMENTS DEUTSCHLAND GMBH**
**85356 Freising (DE)**

(72) Erfinder: **Bayer, Erich**
**85395 Thonhausen (DE)**

(74) Vertreter: **Holt, Michael et al**
**Texas Instruments Limited**
**European Patents Department**
**800 Pavilion Drive**
**Northampton Business Park**
**Northampton NN4 7YL (GB)**

(56) Entgegenhaltungen:
**EP-A- 0 700 146      EP-A- 1 037 367**
**US-A- 5 606 491      US-A- 5 680 300**
**US-A- 5 870 295      US-A- 5 999 040**
**US-A- 6 064 583**

• **PATENT ABSTRACTS OF JAPAN vol. 014, no. 451 (E-0984), 27. September 1990 (1990-09-27) & JP 02 179264 A (NEC CORP.), 12. Juli 1990 (1990-07-12)**

**Beschreibung**

Die Erfindung bezieht sich auf Gleichspannungswandler, die nach dem Prinzip der Ladungspumpe arbeiten.

Viele elektronische Schaltungen benötigen neben der Versorgungsspannung weitere Spannungen, deren Pegel zum Teil über dem der Versorgungsspannung liegen. Eine preiswerte, einfache und insbesondere im Vergleich zu Spulenwandlern sehr platzsparende Lösung zur Bereitstellung dieser weiteren Spannungen stellen Spannungswandler dar, die nach dem Ladungspumpenprinzip arbeiten. Solche Wandler werden z.B. in dem Lehrbuch "The Art of Electronics" von Paul Horowitz, 2. Auflage, Cambridge University Press, New York 1991 auf den Seiten 377 bis 379 beschrieben.

Horowitz beschreibt auch einen einfachen nach dem Ladungspumpenprinzip arbeitenden Gleichspannungswandler, mit dem sich eine maximal ungefähr dem Zweifachen der Eingangsspannung entsprechende Ausgangsspannung erzielen läßt. Die Grundschaltung des Wandlers besteht im wesentlichen aus einem Kondensator und vier steuerbaren Schaltern (z.B. MOS-FETs), wobei eine Elektrode des Kondensators über einen ersten Schalter mit dem Eingangsspannungsanschluß des Wandlers und über einen zweiten Schalter mit Masse verbindbar ist, und die andere Elektrode des Kondensators über den dritten Schalter mit dem Eingangsspannungsanschluß und über den vierten Schalter mit dem Ausgangsspannungsanschluß des Wandlers verbindbar ist. Der Wandler umfaßt ferner eine Steuerschaltung mit Taktoszillator, die die Schalter so ansteuert, daß in einer ersten Phase eines Taktzyklusses, der sogenannten Ladephase, der zweite Schalter und der dritte Schalter durchgeschaltet werden, während die anderen Schalter gesperrt werden, so daß der Kondensator auf die Eingangsspannung aufgeladen wird, und in einer zweiten Phase eines Taktzyklusses, der sogenannten Entladephase, der erste Schalter und der vierte Schalter durchgeschaltet werden, während die anderen Schalter gesperrt werden, so daß nun der aufgeladene Kondensator mit der Eingangsspannung in Serie geschaltet ist, was an einem am Ausgang der Schaltung liegenden Glättungskondensator einen Spannungswert ergibt, der ungefähr dem Zweifachen der Eingangsspannung entspricht. In der Praxis wird der Wandler durch einen Regelungsmechanismus je nach den Erfordernissen der konkreten Anwendung auf eine fest vorgegebene Ausgangsspannung geregelt sein, die zwischen der Eingangsspannung und dem Zweifachen der Eingangsspannung liegt.

Da die nach dem Ladungspumpenprinzip arbeitenden Gleichspannungswandler häufig als integrierte Schaltung in kleinen portablen Geräten, z.B. Mobilfunktelefonen, untergebracht werden müssen, welche von einer Batterie oder einem Akku gespeist werden, ist man für diese Anwendungen bestrebt, die Wandler erstens so klein wie möglich, d.h. unter minimalem Verbrauch von Schaltungsfläche, herzustellen und zweitens den Energieverbrauch der Wandler so gering wie möglich zu halten, um die Batterie oder den Akku zu schonen.

Da die von den Batterien oder Akkus gelieferten Eingangsspannungen der Wandler über die Lebensdauer der Batterien bzw. den Entladezyklus der Akkus häufig stark abfallen, müssen die Wandler in der Lage sein, eine Spannungsverstärkung zu liefern, die auch bei den kleinsten noch ausnutzbaren und von den Batterien bzw. Akkus gelieferten Spannungen noch ausreicht, um die für das Gerät benötigte Spannung zu erreichen. Ist der von der Energiequelle durchlaufene Spannungsbereich groß, werden bevorzugt kaskadierte Gleichspannungswandler eingesetzt, bei denen mehrere Elementarstufen, die im Aufbau z.B. der oben erwähnten und bei Horowitz beschriebenen Ladungspumpe entsprechen können und jeweils einen Ladungspumpkondensator und mehrere steuerbare Schalter umfassen, hintereinandergeschaltet, wobei der Eingang der k-ten Stufe über einen der steuerbaren Schalter der (k-1)-ten Stufe mit dem Ausgang der (k-1)-ten Stufe verbindbar ist. So läßt sich mit zwei Stufen bereits eine Spannungsverstärkung von 4 und mit drei Stufen eine Spannungsverstärkung von 8 erzielen. Allgemein berechnet sich die Spannungsverstärkung eines kaskadierten Wandlers mit N Stufen nach der Formel $2^N$.

Kaskadierte Wandler sind im Stand der Technik bekannt und z.B. in dem US Patent 5,635,776 beschrieben.

Die Patentanmeldung EP 1 037 367 A2 zeigt einen kaskadierten Gleichspannungswandler, der nach dem Prinzip der Ladungspumpe arbeitet, auf eine vorgegebene Ausgangsspannung geregelt ist und n (n>=2) Elementarstufen umfasst, wobei jede Elementarstufe aus jeweils einem Ladungspumpkondensator, und mehreren damit verbundenen steuerbaren Schaltern besteht,
wobei über die steuerbaren Schalter der jeweilige Ladungspumpkondensator

- entweder zwischen den Eingang der jeweiligen Elementarstufe und Masse geschaltet werden kann, so dass er in der Ladephase eines Ladungspumpzyklusses im Maximum in etwa auf die Eingangsspannung der jeweiligen Stufe aufgeladen werden kann,

- oder mit umgekehrter Polarität zwischen den Eingang der jeweiligen Elementarstufe und den Ausgang der jeweiligen Stufe geschaltet werden kann,
so dass in der Entladephase eines Ladungspumpzyklusses am Ausgang der jeweiligen Stufe eine Spannung erzeugt werden kann, die im Maximum in etwa dem Zweifachen der Eingangsspannung der Stufe entspricht,

- wobei am Eingang der ersten Stufe die Eingangsspannung des Gleichspannungswandlers liegt, beide Elektroden des Ladungspumpkondensators der k-ten Stufe über jeweils einen der steuerbaren Schalter mit dem Ausgang der (k-1)-ten Stufe verbindbar sind, k = 2,...,n ist und der Ausgang der n-ten Stufe den Ausgang des Gleichspannungswandlers bildet,

und wobei der Gleichspannungswandler eine Steuerschaltung umfasst.

Das US Patent US 5,999,040 zeigt einen kaskadierten Wandler mit n Stufen bei dem der Gleichspannungswandler darüber hinaus einen oder mehrere weitere steuerbare Schalter umfasst und wobei sich über die weiteren steuerbaren Schalter die Elektrode des Ladungspumpkondensators der n-ten Stufe, die in der Entladephase nicht mit dem Ausgang des Wandlers verbunden ist, statt mit dem Ausgang der (n-1)-ten Stufe mit einem der Ausgänge der l-ten Stufen (l=(n-2),...,1) oder der Eingangsspannung verbinden lässt, so dass der Gleichspannungswandler von den möglichen Spannungsverstärkungsfaktoren einen Spannungsverstärkungsfaktor aufweist, bei dem der Wirkungsgrad des Gleichspannungswandlers maximal ist.

US 5,870,295 und US 5,680,300 zeigen weitere Gleichspannungswandler.

Ein Nachteil der bekannten kaskadierten Gleichspannungswandler der oben beschriebenen Art besteht jedoch darin, daß der Wirkungsgrad der Wandler relativ schlecht ist, der Innenwiderstand relativ hoch ist und die Wandler nur einen einzigen Spannungsverstärkungswert erzielen können.

Die Aufgabe der Erfindung besteht daher darin, einen kaskadierten Gleichspannungswandler zu schaffen, der im Vergleich zu bisherigen Wandlern einen wesentlich höheren Wirkungsgrad erzielen kann und verschiedene Spannungsverstärkungswerte erzielen kann.

Ein weiterer Aspekt der Erfindung besteht darin, einen kaskadierten Gleichspannungswandler zu schaffen, dessen Innenwiderstand im Vergleich zu bisherigen Wandlern im Betrieb vermindert ist.

Die Aufgabe der Erfindung wird gemäß der Erfindung durch einenkaskadierten Gleichspannungswandler mit den Merkmalen nach Anspruch 1 erfüllt.

Ladungspumpe arbeitet, auf eine vorgegebene Ausgangsspannung geregelt ist und n (n≥2) Elementarstufen umfaßt, die aus jeweils einem Ladungspumpkondensator und mehreren damit verbundenen steuerbaren Schaltern bestehen, über die der Ladungspumpkondensator entweder parallel zur Eingangsspannung der jeweiligen Elementarstufe geschaltet werden kann, so daß er in der Ladephase eines Ladungspumpzyklusses im Maximum in etwa auf die Eingangsspannung der jeweiligen Stufe aufgeladen werden kann, oder in Reihe zur Eingangsspannung der jeweiligen Stufe geschaltet werden kann, so daß in der Entladephase eines Ladungspumpzyklusses am Ausgang der jeweiligen Stufe eine Spannung erzeugt werden kann, die im Maximum in etwa dem Zweifachen der Eingangsspannung der Stufe entspricht, wobei am Eingang der ersten Stufe die Eingangsspannung des Gleichspannungswandlers liegt, beide Elektroden des Ladungspumpkondensators der k-ten Stufe über jeweils einen der steuerbaren Schalter mit dem Ausgang der (k-1)-ten Stufe verbindbar sind, k = 2,...,n ist und der Ausgang der n-ten Stufe den Ausgang des Gleichspannungswandlers bildet, **dadurch gekennzeichnet,** daß er darüber hinaus einen oder mehrere weitere steuerbare Schalter, über die sich die Elektrode des Ladungspumpkondensators der n-ten Stufe, die in der Entladephase nicht mit dem Ausgang des Wandlers verbunden ist, mit einem oder mehreren Ausgängen der l-ten Stufen (l=(n-2),...,1) und/oder der Eingangsspannung verbinden läßt, und eine Steuerschaltung umfaßt, die in der Entladephase des Ladungspumpzyklus in Abhängigkeit von der Eingangsspannung des Gleichspannungswandlers denjenigen Schalter aus der Gruppe, die aus dem einen steuerbaren Schalter, über den sich die Elektrode des Ladungspumpkondensators der n-ten Stufe mit dem Ausgang der (n-1)-ten Stufe verbinden läßt, und den weiteren steuerbaren Schalter besteht, durchschaltet und die daran anliegende Spannung mit der genannten Elektrode des Ladungspumpkondensators der n-ten Stufe verbindet, bei dem der Wirkungsgrad des Gleichspannungswandlers maximal ist.

Die Aufgabe wird darüber hinaus durch einen Gleichspannungswandler gelöst, der nach dem Prinzip der Ladungspumpe arbeitet, auf eine vorgegebene Ausgangsspannung geregelt ist und n (n≥2) Elementarstufen umfaßt, die aus jeweils einem Ladungspumpkondensator und mehreren damit verbundenen steuerbaren Schaltern bestehen, über die der Ladungspumpkondensator entweder parallel zur Eingangsspannung der jeweiligen Elementarstufe geschaltet werden kann, so daß er in der Ladephase eines Ladungspumpzyklusses im Maximum in etwa auf die Eingangsspannung der jeweiligen Stufe aufgeladen werden kann, oder in Reihe zur Eingangsspannung der jeweiligen Stufe geschaltet werden kann, so daß in der Entladephase eines Ladungspumpzyklusses am Ausgang der jeweiligen Stufe eine Spannung erzeugt werden kann, die im Maximum in etwa dem Zweifachen der Eingangsspannung der Stufe entspricht, wobei am Eingang der ersten Stufe die Eingangsspannung des Gleichspannungswandlers liegt, beide Elektroden des Ladungspumpkondensators der k-ten Stufe über jeweils einen der steuerbaren Schalter mit dem Ausgang der (k-1)-ten Stufe verbindbar sind, k = 2,...,n ist und der Ausgang der n-ten Stufe den Ausgang des Gleichspannungswandlers bildet, **dadurch gekennzeichnet,** daß er darüber hinaus einen oder mehrere weitere steuerbare Schalter, über die sich die eine Elektrode des Ladungspumpkondensators der n-ten Stufe, die in der Entladephase mit dem Ausgang des Wandlers verbunden ist, in der Ladephase des Ladungspumpzyklusses mit einem oder mehreren Ausgängen der l-ten Stufen (l=(n-2),...,1) und/oder der Eingangsspannung verbinden läßt, und eine Steuerschaltung umfaßt, die in der Ladephase des Ladungspumpzyklusses in Abhängigkeit von der

Vorteilhafte Weiterbildungen der Erfindung sind in den Unteransprüchen gekennzeichnet.

Die Erfindung wird nun anhand der Zeichnungen beispielhalber erläutert. In den Zeichnungen zeigen:

Fig. 1 ein Schaltbild der Ladungspumpschaltung eines bekannten kaskadierten Gleichspannungswandlers mit k Stufen;

Fig. 2 ein Schaltbild der bei einer ersten Ausführungsform eines erfindungsgemäßen Gleichspannungswandlers der Erfindung verwendeten Ladungpumpschaltung mit zwei Elementarstufen;

Fig. 3 ein Schaltbild der bei einer weiteren Ausführungsform eines erfindungsgemäßen Gleichspannungswandlers der Erfindung verwendeten Ladungpumpschaltung mit k Elementarstufen;

Fig. 4 ein Schaltbild der bei der in der Fig. 3 dargestellten Ausführungsform eines erfindungsgemäßen kaskadierten Gleichspannungswandlers verwendeten Steuerschaltung.

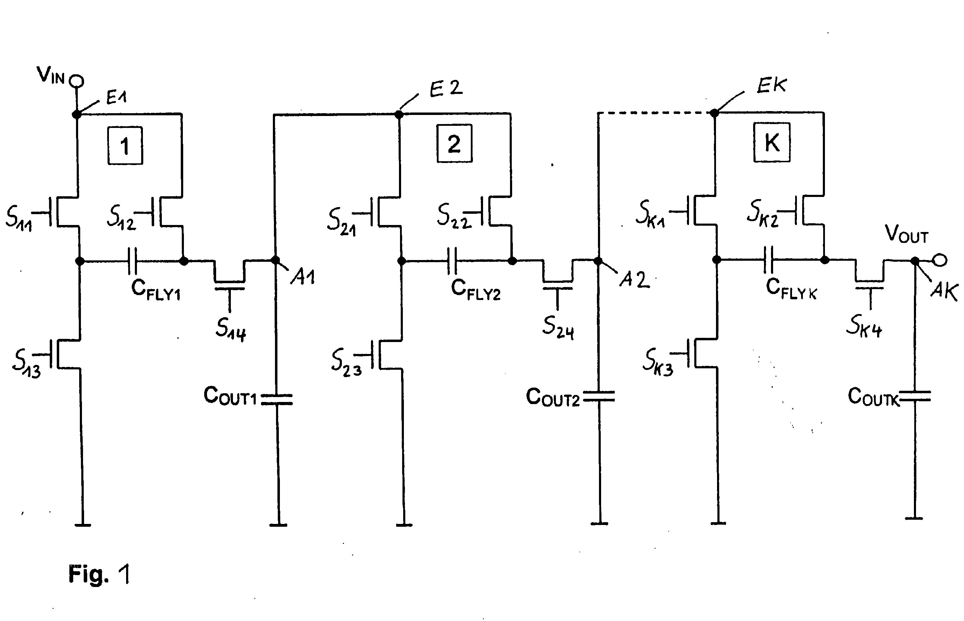

In der Fig. 1 ist ein Schaltbild der Ladungspumpschaltung eines bekannten kaskadierten Gleichspannungswandlers mit k Stufen dargestellt. Dabei besteht jede der k Stufen, von denen nur 3 dargestellt sind, aus einem Ladungspumpkondensator (CFly1, CFly2, ...CFlyK), der sich in der Ladephase des Ladungspumpzyklusses über zwei mit dem Ladungspumpkondensator verbundene steuerbare Schalter S12, S13; S22, S23;...;SK2,SK3 aufladen läßt, die in der Ladephase von einer Steuerschaltung mit Oszillator durchgeschaltet werden, so daß der Ladungspumpkondensator (CFly1, CFly2, ...CFlyK) zwischen die am Eingang der Stufe (E1, E2,...,EK) liegende Spannung und Masse geschaltet wird und auf eine Spannung aufgeladen wird, die im Maximum ungefähr der Spannung am Eingang der Stufe (E1, E2,..., EK) entspricht. In der Entladephase des Ladungspumpzyklusses werden die genannten steuerbaren Schalter S12, S13; S22, S23;...;SK2, SK3 von der Steuerschaltung mit Oszillator gesperrt, wobei nun die weiteren mit dem Ladungspumpkondensator der einzelnen Stufen verbundenen steuerbaren Schalter S11, S14; S21, S24;...;SK1, SK4 von der Steuerschaltung durchgeschaltet werden, so daß nun die Spannungen der einzelnen Ladungspumpkondensatoren jeweils mit der am Eingang der Stufen anliegenden Spannung in Serie geschaltet werden, so daß sich an dem am Ausgang jeder Stufe vorgesehenen Speicherkondensator COUT1, COUT2,..., COUTK jeweils eine Spannung ergibt, die im Maximum ungefähr dem Doppelten der am Eingang der jeweiligen Stufe liegenden Spannung entspricht.

Am Eingang E1 der ersten Stufe liegt die Eingangsspannung VIN der Schaltung. Da der Ausgang einer Stufe (A1, A2,...,AK) jeweils mit dem Eingang der nächsten Stufe verbunden ist, verdoppelt sich die an den Ausgangskondensatoren COUT1, COUT2,...,COUTK erzeugte Spannung von Stufe zu Stufe, so daß die Verstärkung des kaskadierten Gleichspannungswandlers im Maximum etwa $2^K$ beträgt, d.h. die Spannung am Ausgang des Wandlers beträgt im Maximum in etwa VOUT = $2^K$ * VIN.

Die in der Fig. 1 dargestellte Gleichspannungswandlerschaltung wird in der Praxis eine (nicht dargestellte) Regelschaltung aufweisen, die die Ausgangsspannung VOUT auf einen gewünschten Sollwert regelt, wobei sie auf Belastungsschwankungen am Ausgang des Wandlers reagiert.

Der maximale Wirkungsgrad ($\eta$MAX) des bekannten Gleichspannungswandlers berechnet sich nach der fol-genden Formel:

$$\eta_{max} = \frac{V_{OUT} \cdot I_{LOAD}}{V_{IN} \cdot I_{IN}} = \frac{V_{OUT}}{V_{IN} * N} \qquad ,$$

wobei

VIN = Eingangsspannung des Gleichspannungswandlers
VOUT= Ausgangsspannung des Gleichspannungswandlers
ILOAD= Laststrom am Ausgang des Wandlers
IIN= Eingangsstrom
N= Spannungsverstärkungsfaktor des Wandlers

bedeuten.

Bei gegebenem Spannungsverstärkungsfaktor N ist der Wirkungsgrad $\eta$MAX nur durch das Verhältnis zwischen VOUT und VIN definiert. Schwankt bei einem kaskadierten Wandler, der eine Sollausgangsspannung VOUT von 3,3 Volt mit zwei Stufen (N=4) erzielen soll, die Eingangsspannung VIN z.B. zwischen VINMin= 0,9 Volt und VINMax= 1,8 V und beträgt die Eingangsspannung im Mittel VINAV= 1,2 Volt, so beträgt der Wirkungsgrad des Wandlers nicht mehr als 68,75 %.

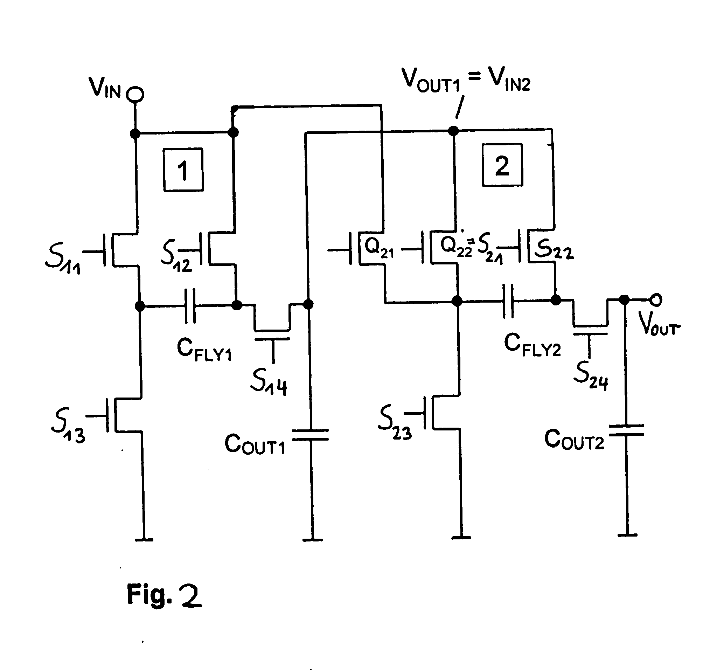

Bei dem erfindungsgemäßen Gleichspannungswandler lassen sich durch Hinzufügen weiterer steuerbarer Schalter weitere Spannungsverstärkungsfaktoren N erzielen. Die Fig. 2 zeigt die Ladungspumpschaltung eines erfindungsgemäßen Gleichspannungswandlers mit 2 Elementarstufen, die entsprechend dem Stand der Technik aufgebaut sind, mit dem Unterschied, daß sich der Ladungspumpkondensator CFLY2 der zweiten Stufe des Wandlers an seiner einen Elektrode nun nicht nur über den Schalter S21 (= Q22) mit dem Ausgang der ersten Stufe, sondern alternativ auch über den weiteren steuerbaren Schalter Q21 mit der Eingangsspannung VIN verbinden läßt. Wird nun in der Entladephase des Ladungspumpzyklusses der Schalter Q21 durchgeschaltet und der Schalter Q22 gesperrt, wobei wie üblich der Schalter S24 durchgeschaltet ist und die Schalter S22 und 523 gesperrt sind, so wird am Ausgangskondensator COUT2 eine Spannung VIN + 2 VIN erzeugt, so daß sich ein Spannungsverstärkungsfaktor 3 erzielen läßt. Damit steht neben dem im üblichen Betrieb, bei dem der steuerbare Schalter Q21 in der Entladephase gesperrt und der steuerbare Schalter Q22 durchgeschaltet ist und sich so ein Spannungsverstärkungsfaktor von 4 erzielen läßt, ein weiterer Spannungsverstärkungsfaktor 3 zur Verfügung, so daß es leichter möglich ist, auf Änderungen der Eingangsspannung VIN des Wandlers, die z.B. durch die Entladung einer Batterie bedingt sein können, zu reagieren (siehe dazu weiter unten), wobei der Wirkungsgrad verbessert wird.

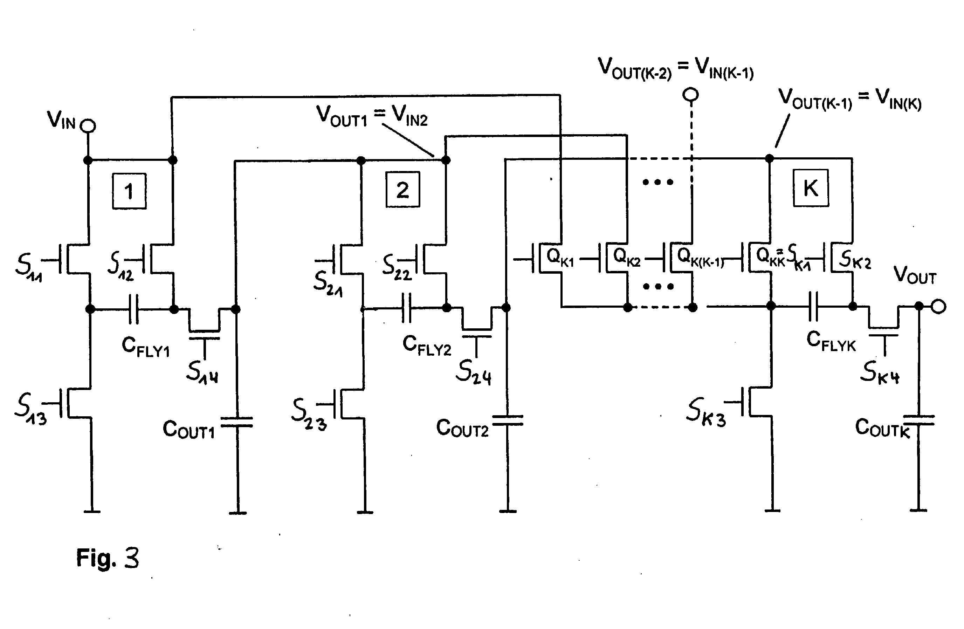

Diese Schaltungsanordnung läßt sich für den Fall eines kaskadierten Wandlers mit K Stufen verallgemeinern, was in der Fig. 3 dargestellt ist. Dabei sind (K-1) zusätzliche steuerbare Schalter QK1, QK2,...,QK(K-1) vorgesehen, über die sich in der Entladephase des Ladungspumpzyklusses die Eingangsspannung VIN bzw. der Ausgang jeder der Stufen (K-1) mit dem Ladungspumpkondensator verbinden läßt, so daß sich neben dem Verstärkungsfaktor $2^K$ weitere K-1 Verstärkungsfaktoren erzielen lassen, nämlich die Faktoren $2^{K-1} + 2^{K-2}$, $2^{K-1} + 2^{K-3}$, $2^{K-1} + 2^{K-4}$, ....., $2^{K-1} + 2^{K-K}$.

So lassen sich z.B. bei einem Gleichspannungswandler mit drei Elementarstufen neben dem Spannungsverstärkungsfaktor 8 die zusätzlichen Spannungsverstärkungsfaktoren 5 und 6 erzielen.

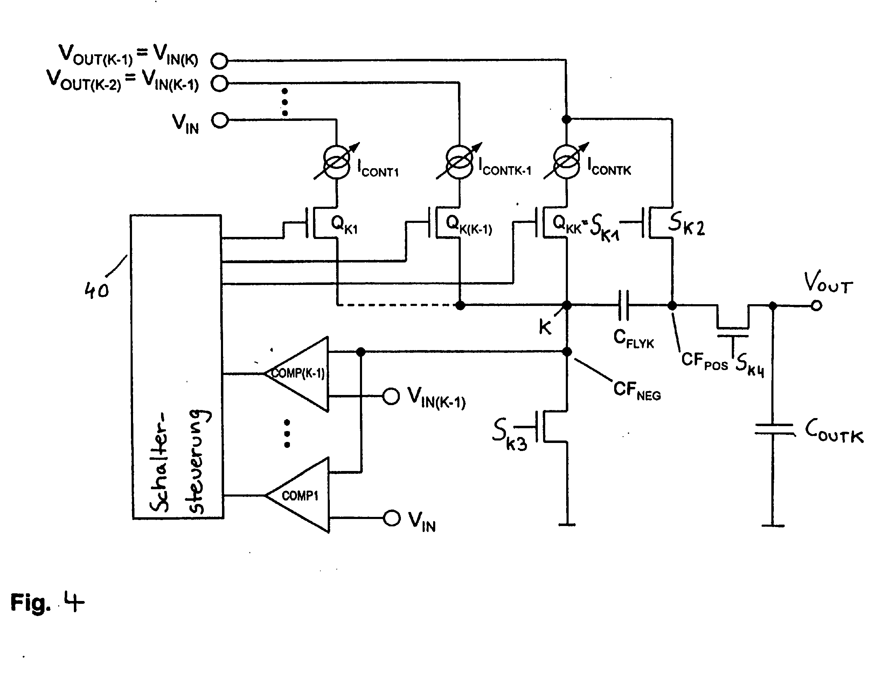

Um nun in Abhängigkeit von der Eingangsspannung VIN des Gleichspannungswandlers den für einen optimalen Wirkungsgrad richtigen Spannungsverstärkungsfaktor einzustellen, ist eine Steuerschaltung vorgesehen, die in der Fig. 4 dargestellt ist. Dabei ist in der Fig. 4 eine Steuerschaltung für einen kaskadierten Gleichspannungswandler mit K Stufen dargestellt. Die in der Fig. 4 dargestellte Steuerschaltung übernimmt gleichzeitig die Regelung der Ausgangsspannung VOUT des Gleichspannungswandlers.

Die Ausgangsspannung VOUT wird mittels eines variablen Stroms ICONT geregelt, der proportional zum Ausgangsstrom IOUT des Gleichspannungswandlers ist. Dazu werden die zusätzlichen steuerbaren Schalter QK1,..., QK(K-1) sowie der Schalter QKK als steuerbare Stromquellen (oder steuerbare Widerstände) betrieben, was in der Fig. 4 durch die in Reihe zu den Schaltern QK1,..., QK(K-1), QKK eingezeichneten Stromquellen ICONT1,..., ICONTK-1, ICONTK symbolisiert ist. Bei dieser Art von Regelung wird der Ladungspumpkondensator CFLYK der letzten Stufe (Stufe K) immer auf einen maximal möglichen Wert aufgeladen.

Nun wird in der Entladungsphase die absolute Spannung an dem in der Figur dargestellten Knoten CFNEG auf den kleinstmöglichen Wert gezwungen.

Dabei wird von der Steuerschaltung des Konverters zunächst die Ausgangsspannung der Stufe K-1 als "Versorgungsspannung" für die Stufe K in der Entladephase des Ladungspumpzyklusses verwendet, wobei der Knoten K über den Schalter QKK (bzw. die durch diesen gebildete gesteuerte Stromquelle ICONTK) mit der Spannung VOUT(K-1) verbunden wird. Ein Komparator COMP(K-1) überprüft, ob die Spannung am Knoten CFNEG in der Entladephase kleiner als die Eingangsspannung VIN(K-1) der vorhergehenden Stufe (K-1) ist, die die Ausgangsspannung der Stufe (K-2) darstellt. Ist dieses der Fall, was eine Schaltersteuerung 40 an einem entsprechenden Ausgangssignal des Komparators erkennt, so verwendet die Schaltersteuerung 40 die Ausgangsspannung der Stufe K-2 anstelle der Ausgangsspannung der Stufe K-1 als Versorgungsspannung für die Stufe K in der Entladephase des nächsten Ladungspumpzyklusses.

Dadurch nimmt der Wirkungsgrad des Wandlers zu, da der aus der Stufe K-2 in der Entladephase gelieferte Strom nur halb so groß ist, wie der, der aus der Stufe K-1 geliefert wurde. Wenn die Konverterstufe K in dieser Weise mit dem Ausgangsstrom aus der Stufe K-1 in der Ladephase und mit dem Ausgangsstrom aus der Stufe K-2 in der Entladephase betrieben wird, ergibt sich der Wirkungsgrad des Wandlers aus der folgenden Formel:

$$\eta = \frac{V_{OUT} \cdot I_{LOAD}}{V_{IN} \cdot I_{IN}} = \frac{V_{OUT}}{V_{IN}} \left( \frac{1}{2^{K-1} + 2^{K-2}} \right) = \frac{V_{OUT}}{V_{IN} * N_A}$$

So kann in Abhängigkeit von der Eingangsspannung VIN des Gleichspannungswandlers und der jeweiligen Belastung am Ausgang des Gleichspannungswandlers der Wirkungsgrad durch Wahl des gerade passenden Spannungsverstärkungsfaktors optimiert werden.

In der Zeichnung der Fig. 4 sind zusätzliche Komparatoren COMP1,...,COMP(K-2) eingezeichnet bzw. angedeutet, die wahlweise eingesetzt werden und mit denen man die Spannung am Knoten CFNEG an der negativen Elektrode des Kondensators mit einer beliebigen anderen Eingangsspannung VIN,..,VIN(K-1), die von vorhergehenden Stufen geliefert wird, vergleichen kann, wenn, wie in der Fig. 3 dargestellt, weitere Spannungsverstärkungsfaktoren gewünscht sind. Die Stufe K wird dann mit einer Spannung in der Entladephase versorgt, die noch größer als die am Knoten CFNEG notwendige Spannung ist, jedoch dieser Spannung von den zur Auswahl möglichen Spannungen am nächsten kommt. Durch sukzessives Vergleichen kann dann immer die Spannung an die eine Elektrode des Ladungspumpkondensators CFLYK angelegt werden, bei der der Wirkungsgrad des Wandlers optimal ist.

Neben der Verbesserung des Wirkungsgrades besteht ein weiterer positiver Effekt des neuen erfindungsgemäßen Gleichspannungswandlers darin, daß der Innenwiderstand der Schaltung vermindert wird, was anhand der folgenden beiden Gleichungen deutlich wird.

Bei einem herkömmlichen kaskadierten Gleichspannungswandler (siehe Fig. 1) mit 2 Stufen (Verstärkung: 4) beträgt der Innenwiderstand Ri4 insgesamt:

$$R_{i4} = \left( \frac{4}{C_{f1} * f_{clk}} + 8 * \sum_{i=1}^{4} R_{Qi} \right) + \left( \frac{1}{C_{f2} * f_{clk}} + 2 * \sum_{i=5}^{8} R_{Qi} \right) \quad,$$

wobei

Cf = Capazität des Ladungspumpkondensators
fclk = Taktfrequenz
RQi = ON-Widerstand der steuerbaren Schalter

Wenn bei einem erfindungsgemäßen kaskadierten Gleichspannungswandler mit 2 Stufen ein Betrieb mit dem "neuen" Verstärkungsfaktor 3 erfolgt, reduziert sich der Innenwiderstand gemäß der folgenden Formel:

$$R_{i3} = \left( \frac{1}{C_{f1} * f_{clk}} + 2 * \sum_{i=1}^{4} R_{Qi} \right) + \left( \frac{1}{C_{f2} * f_{clk}} + 2 * \sum_{i=6}^{9} R_{Qi} \right)$$

Abschließend sei darauf hingewiesen, daß der Wandler natürlich auch ohne die Ausgangskondensatoren der einzelnen Stufen und nur mit einem Ausgangskondensator am Ausgang der Gleichspannungswandlerschaltung betrieben werden kann, wenn dieses gewünscht ist. Ein Betrieb eines kaskadierten Gleichspannungswandlers mit nur einem Ausgangskondensator ist im Stand der Technik bekannt und z.B. in dem oben zitierten US-Patent 5,635,776 beschrieben.

Die erfindungsgemäße Idee läßt sich natürlich auch dadurch realisieren, daß die andere Elektrode des Ladungspumpkondensators der letzten Stufe (n) des Wandlers mit einem oder mehreren der Ausgänge der n-2,...,1 bzw. der Eingangsspannung verbunden wird, wobei jetzt in der Ladephase, und nicht wie oben dargestellt in der Entladephase, diejenige Spannung an den Ladungspumpkondensator der letzten Wandlerstufe angelegt wird, bei der der Wirkungsgrad optimal ist. Für einen Fachmann auf dem hier vorliegenden Gebiet wird aus der obigen Beschreibung ersichtlich sein, wie in diesem Falle die in der Fig. 4 dargestellte Steuerschaltung in entsprechender Weise aufzubauen ist.

## Patentansprüche

1. Kaskadierter Gleichspannungswandler, der nach dem Prinzip der Ladungspumpe arbeitet, auf eine vorgegebene Ausgangsspannung geregelt ist und n (n≥2) Elementarstufen umfaßt,
   wobei jede Elementarstufe aus jeweils einem Ladungspumpkondensator ($C_{FLY1}$, $C_{FLY2}$, ..., $C_{FLYK}$), einem Speicherkondensator ($C_{OUT1}$, $C_{OUT2}$, ..., $C_{OUTK}$) und mehreren damit verbundenen steuerbaren Schaltern ($S_{11}$, $S_{12}$, $S_{13}$, $S_{14}$, ..., $S_{K1}$, $S_{K2}$, $S_{K3}$, $S_{K4}$) besteht,
   wobei über die steuerbaren Schalter ($S_{11}$, $S_{12}$, $S_{13}$, $S_{14}$, ..., $S_{K1}$, $S_{K2}$, $S_{K3}$, $S_{K4}$) der jeweilige Ladungspumpkondensator ($C_{FLY1}$, $C_{FLY2}$, ..., $C_{FLYK}$)

   - entweder zwischen den Eingang (E1, E2, ..., EK) der jeweiligen Elementarstufe und Masse geschaltet werden kann, so daß er in der Ladephase eines Ladungspumpzyklusses im Maximum in etwa auf die Eingangsspannung der jeweiligen Stufe aufgeladen werden kann,

- oder mit umgekehrter Polarität zwischen den Eingang (E1, E2, ..., EK) der jeweiligen Elementarstufe und den jeweiligen Speicherkondensator ($C_{OUT1}$, $C_{OUT2}$, ..., $C_{OUTK}$) der jeweiligen Stufe geschaltet werden kann, so daß in der Entladephase eines Ladungspumpzyklusses am Ausgang der jeweiligen Stufe eine Spannung erzeugt werden kann, die im Maximum in etwa dem Zweifachen der Eingangsspannung der Stufe entspricht,

- wobei am Eingang der ersten Stufe die Eingangsspannung des Gleichspannungswandlers liegt, beide Elektroden des Ladungspumpkondensators der k-ten Stufe über jeweils einen der steuerbaren Schalter mit dem Ausgang der (k-1)-ten Stufe verbindbar sind, k = 2,...,n ist und der Ausgang der n-ten Stufe den Ausgang des Gleichspannungswandlers bildet,

wobei

der Gleichspannungswandler darüber hinaus einen oder mehrere weitere steuerbare Schalter (QK1, QK2, ...,QKn) umfaßt,

wobei sich über die weiteren steuerbaren Schalter (QK1, QK2, ...,QKn) die Elektrode des Ladungspumpkondensators der n-ten Stufe, die in der Entladephase nicht mit dem Ausgang des Wandlers verbunden ist, statt mit dem Ausgang der (n-1)-ten Stufe mit einem der Ausgänge der I-ten Stufen (I=(n-2),...,1) oder der Eingangsspannung verbinden läßt, und

wobei der Gleichspannungswandler eine Steuerschaltung umfaßt, die in der Entladephase des Ladungspumpzyklus in Abhängigkeit von der Eingangsspannung des Gleichspannungswandlers einen Schalter aus einer Gruppe von Schaltern, die aus dem einen steuerbaren Schalter, über den sich die Elektrode des Ladungspumpkondensators der n-ten Stufe mit dem Ausgang der (n-1)-ten Stufe verbinden läßt, und den weiteren steuerbaren Schaltern (QK1, QK2, ...,QKn) besteht, auswählt und durchschaltet und damit die daran anliegende Spannung mit der genannten Elektrode des Ladungspumpkondensators ($C_{FLYn}$) der n-ten Stufe verbindet, so daß der Gleichspannungswandler von den möglichen Spannungsverstärkungsfaktoren einen Spannungsverstärkungsfaktor aufweist, bei dem der Wirkungsgrad des Gleichspannungswandlers maximal ist.

2. Kaskadierter Gleichspannungswandler nach Anspruch 1, bei dem die Anzahl der mehreren weiteren steuerbaren Schalter (QK1, QK2, ...,QKn) n-1 beträgt, so daß sich die genannte Elektrode des Ladungspumpkondensators ($C_{FLYn}$) der n-ten Stufe mit dem Ausgang jeder vorhergehenden Stufe oder mit der Eingangsspannung verbinden läßt.

3. Kaskadierter Gleichspannungswandler nach einem der vorhergehenden Ansprüche, bei dem jeder der Schalter aus der Gruppe von Schaltern aus einer steuerbaren Stromquelle oder einem steuerbaren Widerstand besteht, über die die Ausgangsspannung des Gleichspannungswandlers linear geregelt werden kann.

4. Kaskadierter Gleichspannungswandler nach Anspruch 3, bei dem die Steuerschaltung einen oder mehrere Komparatoren (COMP1, ..., COMP(K-1)) umfaßt, von denen einer die an der in der Entladephase nicht mit dem Ausgang des Wandlers verbundenen Elektrode des Ladungspumpkondensators ($C_{FLYn}$) der n-ten Stufe anliegende Ausgangsspannung einer Stufe in der Entladephase des Ladungspumpzyklusses mit der Ausgangsspannung einer Stufe, die der Stufe, deren Ausgangsspannung gerade in der Entladephase mit dieser Elektrode des Ladungspumpkondensators verbunden ist, vorausgeht, vergleicht und dann, wenn diese Spannung in der Entladephase kleiner als die Ausgangsspannung der vorhergehenden Stufe ist, ein Steuersignal an die Steuerschaltung gibt, die darauf in der Entladephase des darauffolgenden Ladungspumpenzyklusses diese Elektrode des Ladungspumpkondensators mit der Ausgangsspannung der vorhergehenden Stufe verbindet, wobei dieser Vergleich im Falle mehrerer Komparatoren analog mit Hilfe der weiteren Komparatoren sukzessive solange durchgeführt wird, bis eine Stufe erreicht ist, bei der der Wirkungsgrad des Wandlers optimal ist.

**Claims**

1. A cascaded DC-DC converter which operates according to the electric charge pump principle, regulated to a predetermined output voltage and comprising n (n>2) basic stages;

where each basic stage includes a charge pump capacitor ($C_{FLY1}$, $C_{FLY2}$,...,$C_{FLYK}$), a storage capacitor ($C_{OUT1}$, $C_{OUT2}$, ..., $C_{OUTK}$) and several controllable switches ($S_{11}$, $S_{12}$, $S_{13}$, $S_{14}$, ..., $S_{K1}$, $S_{K2}$, $S_{K3}$, $S_{K4}$) connected thereto, where the charge pump capacitor ($C_{FLY1}$, $C_{FLY2}$,...,$C_{FLYK}$) can be charged by means of the controllable switches ($S_{11}$, $S_{12}$, $S_{13}$, $S_{14}$, ..., $S_{K1}$, $S_{K2}$, $S_{K3}$, $S_{K4}$)

either between the input (E1, E2,...EK) of said basic stage and ground, so that the capacitor in the charging phase of a charge pump cycle can be charged to a maximum of approximately the input voltage of said stage,

or can be switched with reversed polarity between the input (E1, E2,...EK) of the said basic stage and the said storage capacitor ($C_{OUT1}$, $C_{OUT2}$, ..., $C_{OUTK}$) of said stage, so that a voltage can be created in the discharging phase

**EP 1 202 439 B1**

of a charge pump cycle at the output of said stage, this voltage corresponding to a maximum approximately of double the input voltage of the stage,

where the input voltage of the DC-DC converter is situated at the input of the first stage, both electrodes of the charge pump capacitor of the k-th stage are connectable by one of the controllable switches with the output of the (k-1)-th stage, where k=2,...,n and the output of the n-th stage forms the output of the DC-DC converter, wherein

the DC-DC converter comprises additionally one or more further controllable switches (QK1, QK2,...QKn),

where the electrode of the charging pump capacitor of the n-th stage, which is not connected to the output of the converter in the discharging phase, is connected over the further controllable switches (QK1, QK2,...QKn) instead of with the output of the (n-1)-th stage, to one of the outputs of the I-th stages (I=(n-2),...,1) or with the input voltage, and where the DC-DC converter comprises a control circuit, which selects and connects, in the discharge phase of the charge pump cycle, in response to the input voltage of the DC-DC converter, one switch from a group of switches that consists of the one controllable switch through which the electrode of the charge pump capacitor of the n-th stage connects to the output of the n-1th stage, and the further controllable switches (QK1,QK2, ..., QKn), and thereby connects the voltage applied thereto with said electrode of the charge pump capacitor ($C_{FLYn}$) of the nth stage, such that the DC-DC converter demonstrates a voltage amplification factor from the possible voltage amplification factors, at which the level of efficiency of the DC-DC converter is optimal.

2. The cascaded DC-DC converter according to claim 1 in which the number of additional further controllable switches (QK1, QK2,...QKn) is such that the said electrode of the charging pump capacitor ($C_{FLYn}$) of the n-th stage may be connected with the output of each previous stage or with the input voltage.

3. The cascaded DC-DC converter according to any of the previous claims in which each of the switches from the group of switches comprises a controllable current source or a controllable resistor, by which the output voltage of the DC-DC converter can be linearly controlled.

4. The cascaded DC-DC converter according to claim 3 in which the control circuit comprises one or more comparators (COMP1, ..., COMP (K-1)), which compares one of the output voltages of a stage applied in the discharge phase of the charge pump cycle to the electrode of the charge pump capacitor of the n-th stage, which is not connected to the output of the converter, to the output voltage of a stage whose output voltage in the discharge phase is already connected with this electrode of the charge pump capacitor and then if this voltage is smaller in the discharge phase than the output voltage of the previous stage, a control signal is sent to the control circuit, which accordingly in the discharge phase of the subsequent charge pump cycle, connects said electrode of the charge pump capacitor with the output voltage of the previous stage, where this comparison in the case of multiple comparators is carried out successively along the same lines as the other comparators such that a level is reached at which the efficiency of the converter is optimal.

## Revendications

1. Un convertisseur cc-cc en cascades qui marche selon le principe d'une pompe à charge électrique, régulé à une tension de sortie prédéterminée et qui comprend les étapes élémentaires n(n≥2) ;

où chaque étape élémentaire comprend un condensateur de pompe à charge ($C_{Fly1}$, $C_{Fly2}$, ... $C_{FlyK}$), un condensateur de stockage ($C_{OUT1}$, $C_{OUT2}$, .... $C_{OUTK}$) et plusieurs interrupteurs réglables ($S_{11}$, $S_{12}$, $S_{13}$, $S_{14}$, ..., $S_{K1}$ $S_{K2}$, $S_{K3}$, $S_{K4}$) y branchés,

où chaque condensateur de pompe à charge ($C_{Fly1}$, $C_{Fly2}$, ... $C_{FlyK}$) peut être chargé par les interrupteurs réglables ($S_{11}$, $S_{12}$, $S_{13}$, $S_{14}$, ..., $S_{K1}$, $S_{K2}$, $S_{K3}$, $S_{K4}$),

soit entre l'entrée (E1, E2, ...EK) d'étape élémentaire et la terre pour que le condensateur dans la phase de charge d'un cycle de pompe à charge puisse être chargé au maximum d'environ la tension d'entrée de l'étape,

ou puisse être commuté avec polarité inverse entre l'entrée (E1, E2, ... EK) de ladite étape élémentaire et ledit condensateur de stockage ($C_{OUT1}$, $C_{OUT2}$, .... $C_{OUTK}$) de ladite étape, pour que une tension puisse être produite dans la phase de décharge d'un cycle de pompe à charge à la sortie de ladite étape, cette tension correspond au maximum environ de deux fois la tension d'entrée de ladite étape,

où la tension d'entrée du convertisseur cc-cc se trouve à l'entrée de la première étape, les deux électrodes du condensateur de pompe à charge de la k$^{ième}$ étape sont branchées par un des commutateurs réglables à la sortie de la (k-1)$^{ième}$ étape, où k = 2, ..., n et la sortie de la n $^{ième}$ étape forme la sortie du convertisseur cc-cc, où

le convertisseur cc-cc comprend en outre un ou plusieurs commutateurs réglables (QK1, QK2, ..., QKn),

où l'électrode du condensateur de pompe à charge de la n$^{ième}$ étape, qui n'est pas branchée à la sortie du convertisseur dans la phase de décharge, est branchée par les autres commutateurs réglables (QK1, QK2, ..., QKn), non à la sortie de la (n-1)$^{ième}$ étape mais à une des sorties de la I$^{ième}$ étape(I=(n-2),..., 1) ou à la tension d'entrée, et où le convertisseur cc-cc comprend un circuit de commande, qui sélectionne et branche, dans la phase de décharge du cycle de pompe à charge, en réponse à la tension d'entrée du convertisseur cc-cc, un commutateur d'un groupe de commutateurs qui comprend un commutateur réglable par lequel l'électrode du condensateur de pompe à charge de la n$^{ième}$ étape branche à la sortie de la n-1$^{ième}$ étape, et aux autres commutateurs réglables (QK1, QK2, ..., QKn) et alors branche la tension y appliquée à ladite électrode du condensateur de pompe à charge (C$_{FLYn}$) de la n$^{ième}$ étape, de telle façon que le convertisseur cc-cc montre un facteur d'amplification de tension des facteurs d'amplification de tension possibles, auquel le niveau d'efficacité du convertisseur cc-cc est optimal.

2. Le convertisseur cc-cc en cascades selon la revendication 1, dans laquelle le nombre de commutateurs réglables supplémentaires (QK1, QK2, ...,QKn) est de telle façon que ladite électrode du condensateur de pompe à charge (C$_{FLyn}$) de la n$^{ième}$ étape peut être branchée à la sortie de chaque étape précédente ou à la tension d'entrée.

3. Le convertisseur cc-cc en cascades selon les revendications précédentes dans laquelle chaqu'un des commutateurs du groupe de commutateurs comprend une source de courant réglable ou une résistance réglable, par laquelle la tension de sortie du convertisseur cc-cc peut être réglée linéairement.

4. Le convertisseur cc-cc en cascades selon la revendication 3 dans laquelle le circuit de commande comprend un ou plus comparateurs (COMP1, ..., COMP (K-1)), qui compare une des tensions de sortie d'une étape, appliquée pendant la phase de décharge d'un cycle de pompe à charge à l'électrode du condensateur de pompe à charge de la n$^{ième}$ étape, qui n'est pas branchée à la sortie du convertisseur, à la tension de sortie d'une étape dont la tension de sortie dans la phase de décharge est déjà branchée avec cette électrode du condensateur de pompe à charge et puis, si cette tension est plus petite dans la phase de décharge que la tension de sortie de l'étape précédente, un signal de commande est envoyé au circuit de commande, qui en conséquence pendant la phase de décharge du cycle de pompe à charge suivant , branche ladite électrode du condensateur de pompe à charge à la tension de sortie de l'étape précédente, où cette comparaison dans le cas de plusieurs comparateurs, soit fait successivement selon les mêmes ordres des autres comparateurs de telle façon qu'un niveau est atteinte auquel l'efficacité du convertisseur est optimale.

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- US 5635776 A
- EP 1037367 A2
- US 5999040 A
- US 5870295 A
- US 5680300 A

**In der Beschreibung aufgeführte Nicht-Patentliteratur**

- **PAUL HOROWITZ.** The Art of Electronics. Cambridge University Press, 1991, 377-379